# EUROPÄISCHE PATENTANMELDUNG

(11) **EP 2 177 837 A2**
(43) Veröffentlichungstag der Anmeldung: **21.04.2010**
(21) Anmeldenummer: 09013083.2
(22) Anmeldetag: 16.10.2009
(51) Int. Cl.: F24D 11/00, F24D 19/10

(54) **Verfahren und Vorrichtung zur Regelung einer Warmwasseraufbereitungsanlage**

(30) Priorität: 17.10.2008 DE 102008051854
(71) Anmelder: REHAU AG + Co, 95111 Rehau (DE)
(72) Erfinder: Dietz, Eckhard, 90408 Nürnberg (DE); Gottschalk, René, 90409 Nürnberg (DE)

(57) **Zusammenfassung**

Die Erfindung betrifft ein Verfahren und eine Vorrichtung zur Regelung einer Warmwasseraufbereitungsanlage. Eine Solaranlage ist dabei Teil einer kombinierten Warmwasseraufbereitungsanlage zur Erwärmung von Trinkwasser in einem Warmwasserspeicher. Zusätzlich weist die Anlage noch eine konventionelle Heizung auf. Zur Regelung des Nachladens durch die konventionelle Heizung und Solaranlage wird durch die Anlage der Luftdruck gemessen, mit dem auf einfache Art und Weise eine Vorhersage über zukünftigen solaren Ertrag möglich ist. Mit einer genauen Abschätzung des solaren Ertrags kann die Ausbeute aus solarer Energie gesteigert und somit auch der Wirkungsgrad der Warmwasseraufbereitungsanlage verbessert werden.

## Beschreibung

Die Erfindung betrifft ein Verfahren zur Regelung oder Steuerung eines Nachladens eines Energiespeichers nach dem Oberbegriff des Anspruchs 1. Weiterhin betrifft die Erfindung eine Vorrichtung zum Nachladen nach dem Oberbegriff des Anspruchs 12.

Solaranlagen, die der Warmwasseraufbereitung dienen, werden für gewöhnlich von konventionellen Heizungen in der Warmwasseraufbereitung unterstützt. In einem solchen bivalenten System wird den Solaranlagen die primäre Arbeit zugewiesen, so dass die konventionelle Heizung nachgelagert ist. Solaranlagen können nämlich bei bedecktem Himmel oder nachts keinen bzw. nur einen geringen Beitrag zur Warmwasserbereitung liefern. In dieser Zeit übernimmt die konventionelle Heizung die Warmwasseraufbereitung.

Das Warmwasser wird in einem Warmwasserspeicher gespeichert, wobei bei Unterschreitung einer Solltemperatur in dem Warmwasserspeicher, das Wasser durch die konventionelle Heizung oder die Solaranlage nachgeladen wird. Sinnvoll bei solchen kombinierten Warmwasseraufbereitungsanlagen ist ein möglichst hoher Ertrag aus der Solaranlage zur Warmwasseraufbereitung. Dieser Ertrag wird vornehmlich durch die vorrangige Heizunterstützung durch die Solaranlage erreicht. Mit dem Nachladen des Warmwasserspeichers durch die Solaranlage können fossile oder auch nachwachsende Energieträger, die in konventionellen Heizungen zum Einsatz kommen, gering gehalten werden.

Für einen optimalen Ertrag aus der Solaranlage ist es notwendig, konventionelle Heizung und Solaranlage beim Nachladen des Warmwasserspeichers aufeinander abzustimmen. Sofern eine solche Abstimmung nicht erfolgt, ist es nicht unwahrscheinlich, dass die konventionelle Heizung gerade das Wasser aufheizt, während die Solaranlage ebenfalls gerade zum Nachladen des Warmwasserspeichers beiträgt. Hierdurch geht unnötig Energie verloren und der Wirkungsgrad der Anlage sinkt. Solaranlagen können deshalb mittlerweile mit prädiktiven, also vorausschauenden Steuerung & Regelung ausgerüstet werden, die zukünftige Erträge aus der Solaranlage berechnen.

Zur vorausschauenden Regelung gibt es derzeit verschiedene Ansätze und Verfahren, die weitestgehend auf der mathematischen Auswertung der in einer Solaranlage verfügbaren Informationen basiert. Hierzu werden insbesondere die Kollektortemperatur, aber auch Außentemperatur, die Solarstrahlung, die Pumpendrehzahl bzw. -funktion und Uhrzeit herangezogen. Die Auswertung erfolgt aber lediglich auf Basis historischer oder aktueller Daten sowie der aktuellen Zeit, womit Trends und mögliche Zeitdauern errechnet werden können. Bei der DE 198 56 344 C1 wird eine unerwünschte Nachheizung eines solaren Speicherbehälters durch Kesselsperrung erreicht. Bei der DE 198 31 147 A1 wird hingegen eine Sollwertverschiebung des Warmwassers angestrebt.

Zusätzlich gibt es weitere Ansätze, zukünftige Erträge aus der Solaranlage zu berechnen. Beispielsweise wird die Warmwasseraufbereitungsanlage über das Internet mit einer Wettervorhersage auf Basis mathematisch/meteorologischer Wettermodelle versorgt, die eine ungefähre Aussage über möglichen Sonnenschein zulassen. Nachteilig bei diesem Ansatz ist die sehr aufwändige und kostenintensive Umsetzung, insbesondere auch eine Internetanbindung, womit dieses Modell wenig geeignet ist für Kleinanlagen im Haushalt.

Die Auswertung und mathematische Bewertung historischer Daten wie Temperatur, Sonnenstrahlung und Pumpenaktivität - Drehzahl, Drehzahlwert-Integration, Funktion - ist recht komplex und birgt Risiken hinsichtlich eines echten Wettertrends. Aber auch mit der Einbeziehung von aktuellen Daten, lässt sich nur schwerlich bemessen, wann und für wie lange Ertrag mit der Solaranlage erzielbar ist.

Der Erfindung liegt die Aufgabe zugrunde ein Verfahren und eine Vorrichtung der eingangs genannten Art dadurch zu verbessern, dass eine Effizienz des Einsatzes einer Solaranlage in Verbindung mit einer konventionellen Warmwasserbereitungseinrichtung verbessert wird.

Diese Aufgabe wird erfindungsgemäß durch ein Verfahren nach den Merkmalen des Anspruchs 1 sowie einer Vorrichtung nach den Merkmalen des Anspruchs 12 gelöst. Danach wird zur Regelung oder Steuerung des Nachladens des Energiespeichers ein zu messender atmosphärischer Luftdruck herangezogen. Zur Effizienzsteigerung ist das Abschätzung einer Wettervorhersage respektive eines Wettertrends wichtig. Mit dem Messen des atmosphärischen Luftdrucks ist diese Abschätzung möglich, wohingegen beim Stand der Technik nur unmittelbar die Anlage betreffende Werte gemessen wurde. Der Luftdruck lässt recht zuverlässig unter Zurückgreifen auf meteorologische Erfahrungen hinsichtlich Historie und Stärke des Anstiegs bzw. des Abfalls eine Wahrscheinlichkeitsbewertung für zukünftige solare Erträge zu.

Hoher Luftdruck ist ein Kennzeichnen für gutes Wetter mit wolkenlosem Himmel und somit ertragreichen Sonnenschein. Durch den Vergleich historischer Luftdruckdaten kann eine Aussage darüber getroffen werden, ob sich der Himmel aufklart und in naher Zukunft mit Sonnenschein zu rechnen ist. Umgekehrt ist bei Druckabfall mit schlechtem Wetter und damit auch mit mehr Wolken zu rechnen. Ein Ertrag aus der Solaranlage aufgrund fehlenden Sonnenscheins wäre in solch einem Fall anzunehmen. Im Übrigen wird der Luftdruck mittels eines Barometers und/oder Mikrobarometers gemessen.

Besonders vorteilhaft ist das Heiz- und/oder Kühlsystem ein mono- oder polyvalentes, insbesondere ein bivalentes System. Die Regelung über den Luftdruck findet besonders dort seine Vorteile, wo wenigstens zwei Heiz- oder Kühlquellen miteinander in Konkurrenz stehen und eine der Energiequellen nur in Abhängigkeit des Wetters Energie liefert. Dennoch kann es auch sinnvoll sein, wenn bei einem monovalenten System das Nachladen über die äußeren Wetterbedingungen geregelt bzw. gesteuert wird.

Nach einem vorteilhaften Ausführungsbeispiel weist das System eine primäre Energiequelle, insbesondere eine Solaranlage oder andere regenerative Energiequelle, und eine nachgelagerte Energiequelle, insbesondere eine konventionelle Energiequelle, auf. Diese wenigstens zwei Energiequellen laden in Abhängigkeit des Luftdrucks den Energiespeicher nach.

In einer vorteilhaften Ausgestaltung der Erfindung ist ausschließlich der atmosphärische Luftdruck Grundlage der Regelung für die Erzeugung von Wärme und/oder Kälte durch das Heiz- und/oder Kühlsystem. Zur Steigerung des solaren Deckungsanteils der Solaranlage ist es von großem Vorteil über zukünftigen Sonnenschein informiert zu sein. Sofern nämlich zu einem Zeitpunkt zu dem eine Nachladung des Warmwasserspeichers anstünde und zu dem nicht genügend solare Energie zur Versorgung der Solaranlage bereitstünde, könnte das Nachladen durch die konventionelle Heizung vermieden werden, wenn die Warmwasserbereitungsanlage Informationen über unmittelbar bevorstehenden Sonnenschein hätte. Das Nachladen würde dann verzögert werden, wenn aufgrund des Luftdrucks die Annahme bestünde, dass Sonnenschein erwartet wird und das Nachladen von der Solaranlage betrieben werden könnte. Insbesondere erfolgt in solch einem Fall eine Sollwertverschiebung der Speicher- bzw. Medientemperatur des Energiespeichers.

In einer vorteilhaften Weiterbildung der Erfindung werden ergänzend weitere Daten zur Regelung der Erzeugung von Wärme durch das Heiz- und/oder Kühlsystem herangezogen. Vor allem ist hier die aktuelle Uhrzeit mit Sonnenstand heranzuziehen, da bei nächtlich wolkenlosem Himmel kein Sonnenschein zu erwarten ist. Auch verschiebt sich die Hell-/Dunkelphase über den Verlauf eines Jahres. Somit kann beispielsweise im Sommer in den frühen Morgenstunden das Nachladen durch die Solaranlage erfolgen, wohingegen im Winter die Solaranlage nur begrenzt der Warmwasserbereitung zur Verfügung steht.

Bevorzugt sind die ergänzenden Daten historische und/oder aktuelle Daten der Warmwasseraufbereitungsanlage. Hierzu sind insbesondere auch Daten einer Pumpenfunktion, einer Kollektortemperatur, Daten über den Sonnenschein, Datum, Uhrzeit sowie Energieinhalt des Energiespeichers, Außentemperatur, Raumtemperatur, Luftfeuchte und Verbrauchs-/Lastprofile heranzuziehen. Aus diesen Daten lässt sich nämlich auf einfache Weise ermitteln, zu welchen Zeiten und Tagen bzw. auch zu welchen meteorologischen Bedingungen die Solaranlage zum Nachladen des Warmwasserspeichers zur Verfügung stand. Weiterhin kann mit diesen Daten Bedingungen ermittelt werden, nach denen eine mögliche Inbetriebnahme der Solaranlage bevorsteht. Insbesondere auch die Kollektortemperatur ist hierbei interessant, damit diese festgestellt werden kann, ab wann ein Speichermedium in der Solaranlage genügend solare Energie aufnimmt zum Betreiben der Anlage.

In einer bevorzugten Ausgestaltung der Erfindung wird mit der Ermittlung des atmosphärischen Luftdrucks eine Wahrscheinlichkeitsbewertung über den zukünftigen Sonnenschein durchgeführt. Für die Wahrscheinlichkeitsbewertung können auch die ergänzenden Daten herangezogen werden. Mit der Berechnung der Wahrscheinlichkeit über den Eintritt von Sonnenschein lässt sich nämlich noch keine Aussage darüber treffen, ob der Sonnenschein ausreichend ist, die Solaranlage mit hinreichend solarer Energie zu versorgen. Es könnte einerseits nämlich nur vorübergehend die Sonne scheinen oder der Sonnenschein ist nicht intensiv genug. Beispielsweise könnte im Winter, wenn die Sonne in einem flacheren Winkel zur Erdoberfläche, und somit auf die Kollektoren scheint, die solare Energie nicht ausreichend sein, die Solaranlage zu betreiben. Hierzu ist es sodann erforderlich, die Wahrscheinlichkeit über den zukünftigen Sonnenschein insbesondere im Vergleich zu den historischen Daten, auch der ergänzenden Daten, zu bewerten. Mit so einer Bewertung lassen sich Schlüsse darüber ziehen, inwiefern trotz einer hohen Eintrittswahrscheinlichkeit von Sonnenschein diese ausreicht, die Solaranlage zu betreiben.

Besonders vorteilhaft ist, wenn das Nachladen in Abhängigkeit des Sonnenscheins, insbesondere einer Sonnenscheindauer, reguliert wird. Zur Verbesserung des Wirkungsgrades der kombinierten Warmwasseraufbereitungsanlage ist es notwendig, dass die Solaranlage so oft wie möglich zum Nachladen des Warmwasserspeichers herangezogen wird.

Besonders vorteilhaft ist es zusätzlich, wenn das Nachladen in Abhängigkeit der Sonneneinstrahlung, insbesondere im Bereich der Solaranlage reguliert wird. Im Gegensatz zum Sonnenschein stellt die Sonneneinstrahlung eine Kenngröße der Energieintensität dar. Die Strahlungsleistung der Sonne ist relativ konstant, wobei durch atmosphärische Einflüsse und Stellung der Sonne zur Erde die Strahlungsleitung vermindert werden kann. Insbesondere ist in den Wintermonaten die Strahlungsleistung nicht so hoch, wie sie im Sommer ist. Ebenso kann die Strahlungsleistung der Sonne durch Aerosole beeinträchtigt werden, obwohl die Sonne scheint.

In einem bevorzugten Ausführungsbeispiel der Erfindung wird bei einer hohen Wahrscheinlichkeit auf Sonnenschein die nachrangige Energiequelle zum Nachladen zeitlich unterdrückt, insbesondere gesperrt. Wenn nämlich zum Zeitpunkt des anstehenden Nachladens die Solaranlage mit ausreichend solarer Energie versorgt wird, kann die Solaranlage zum Nachladen eingesetzt werden. Dieses gilt insbesondere auch für den Fall, dass zum Zeitpunkt des anstehenden Nachladens noch nicht ausreichend solare Energie zum Betrieb der Solaranlage vorhanden ist. Das Nachladen wird bei hoher Wahrscheinlichkeit auf Sonnenschein verzögert und die Heizung zum Nachladen gesperrt. Bei durchschnittlicher und niedriger Wahrscheinlichkeit kann im Übrigen das Nachladen durch die Heizung beeinflusst werden. Vorzugsweise wird bei durchschnittlicher und niedriger Wahrscheinlichkeit die Dauer des Nachladens durch die Heizung verkürzt. Ebenso ist es möglich, dass die Heizleistung der Heizung herabgesetzt und die verbleibende Heizleistung durch die Solaranlage kompensiert wird.

Weiterhin ist vorgesehen, dass die Regulierung der Sperrung der nachrangigen Energiequelle dynamisch erfolgt, insbesondere aber die Dauer der Sperrung abhängig von einem Trend oder von der Bewertung der Wahrscheinlichkeit über die Sonnenscheindauer ist. Die Möglichkeit der Wahrscheinlichkeitsbewertung über die Sonnenscheindauer bzw. der Berechnung eines Wettertrends lässt eine Regulierung der Sperrung der Heizung in Abhängigkeit der sich verändernden meteorologischen Gegebenheiten zu. Eine starre Regulierung, die sich an historischen Daten orientiert, wird damit erübrigt.

Weiterhin wird der Warmwasserspeicher in Abhängigkeit der Sonnenscheindauer beladen. Bei Entnahme von Warmwasser aus dem Speicher muss dieser mit Wasser wieder aufgefüllt werden, wobei die Temperatur in dem Speicher wieder auf Solltemperatur zu bringen ist.

Eine Vorrichtung zum Nachladen eines Energiespeichers ist durch die Merkmale des Anspruchs 10 gekennzeichnet. Danach regelt bzw. steuert eine Regel- bzw. Steuereinheit das Nachladen in Abhängigkeit von durch die Vorrichtung gemessenem atmosphärischen Luftdrucks. Zur Erhöhung eines Wirkungsgrades der Warmwasseraufbereitungsanlage ist es notwendig, dass das Nachladen möglichst durch die Solaranlage erfolgt. Für eine Optimierung ist deshalb eine Vorhersage über möglichen Sonnenschein und Dauer dessen nötig. Vor allem kann mit Hilfe des atmosphärischen Luftdrucks eine Aussage darüber getroffen werden, wie sich die Wetterlage, auch innerhalb kürzerer Zeit, ändert und ob mit Sonnenschein oder mit Wolken zu rechnen ist. In einer vorteilhaften Weiterbildung der Erfindung ist der atmosphärische Luftdruck ausschließlich Grundlage des Nachladens durch die Solaranlage.

Vorteilhafterweise sind auch in einem bevorzugten Ausführungsbeispiel der Erfindung weitere ergänzende Daten zum Regeln des Nachladens durch die Solaranlage heranziehbar, wobei als ergänzende Daten historische und/oder aktuelle Daten der Warmwasseraufbereitungsanlage dienen können. Diese ergänzenden Daten sind Daten einer Pumpenfunktion, einer Kollektortemperatur, Daten über den Sonnenschein, des Energieinhalts des Energiespeichers, der Luftfeuchte, Last-/Verbrauchsprofile oder dergleichen. Ebenso beeinflussen Datum und Uhrzeit die Regeleinheit. Mit diesen ergänzenden Daten ist eine noch genauere Vorhersage über einen Wettertrend bzw. zu erwartenden Sonnenschein möglich. Daten, die durch die Anlage ermittelt wurden, werden zur Berechnung des Wettertrends gespeichert und gehen als Auswahlparameter in eine Bewertung über einen möglichen bevorstehenden Sonnenschein ein.

Weiterhin ist das System vorzugsweise ein mono- oder polyvalentes System, insbesondere ein bivalentes. Bei einem bivalenten System weist dasselbige eine primäre Energiequelle, insbesondere eine Solaranlage oder andere regenerative Energiequelle, insbesondere eine konventionelle Energiequelle, auf, wobei der Energiespeicher in Abhängigkeit des Luftdrucks durch die Energiequellen nachladbar ist.

Vorzugsweise wird der Luftdruck mit einem Barometer und/oder Mikrobarometer ermittelt. Insbesondere lassen sich mit einem Mikrobarometer auch schon geringe Abweichungen des atmosphärischen Luftdrucks messen, wodurch eine sehr genaue Wettervorhersage durch die Vorrichtung möglich ist. Zur Ermittlung des Luftdrucks ist es dabei egal, wo das Barometer bzw. das Mikrobarometer positioniert ist. Es kann an oder in der Nähe der Sonnenkollektoren montiert sein oder aber in der Nähe der Regeleinheit, die üblicherweise bei dem Warmwasserspeicher oder der konventionellen Heizung positioniert ist. Zusätzlich ist es aber auch möglich, das Barometer als Bestandteil des Reglers vorzusehen, es also auf der Reglerplatine anzuordnen. Ein signifikanter Unterschied zwischen außerhalb eines Gebäudes oder innerhalb eines Gebäudes ist nicht zu erwarten und wird somit auch nicht Einfluss auf die Berechnung eines Wettertrends haben.

In einer bevorzugten Weiterbildung der Erfindung ist mittels des atmosphärischen Luftdrucks eine Wahrscheinlichkeit über eine zukünftige Sonnenscheindauer ermittelbar. Abhängig von der Wahrscheinlichkeit ist das Nachladen durch die Heizung und/oder die Solaranlage regulierbar. Um einen möglichst hohen Wirkungsgrad der Warmwasseraufbereitungsanlage zu erzielen, ist es wichtig, dass das Nachladen der Solaranlage erfolgt. In Konsequenz dessen, ist die Berechnung der Wahrscheinlichkeit über Sonnenschein wichtig für das Betreiben der Anlage. Sofern nämlich bei einer Wetterlage, die ein Betreiben der Solaranlage nicht zulässt, der Warmwasserspeicher wieder nachgeladen werden müsste und eine Wetterlage bevorsteht, die das Betreiben der Anlage zuließe, könnte das Nachladen ausgesetzt werden. Mit Eintritt von Sonnenschein und ausreichend solarer Energie könnte dann über die Solaranlage nachgeladen werden.

Das Wasser wird mit der konventionellen Heizung und/oder der Solaranlage in dem Warmwasserspeicher erhitzt. Hierzu erfolgt insbesondere bei Betrieb der Solaranlage das Nachladen durch die Solaranlage. Der Betrieb der Solaranlage ist abhängig von der durch die Sonne gelieferten Energie. Die Strahlungsleistung der Sonne ist abhängig von verschiedenen Einflussfaktoren. So liefert die Sonne bei bewölktem Himmel nicht genügend Energie, um die Solaranlage für das Nachladen des Warmwasserspeichers heranzuziehen. Dennoch ist die Anlage derart ausgelegt, dass mit dem Nachladen zu warten ist, wenn mit genügend solarer Energie in einer vorherbestimmten Zeit zu rechnen ist.

Weitere vorteilhafte Ausgestaltungen des Verfahrens und der Vorrichtung ergeben sich aus den Unteransprüchen.

Ein bevorzugtes Ausführungsbeispiel der Erfindung wird nachfolgend anhand der Zeichnung näher erläutert. In dieser zeigt:

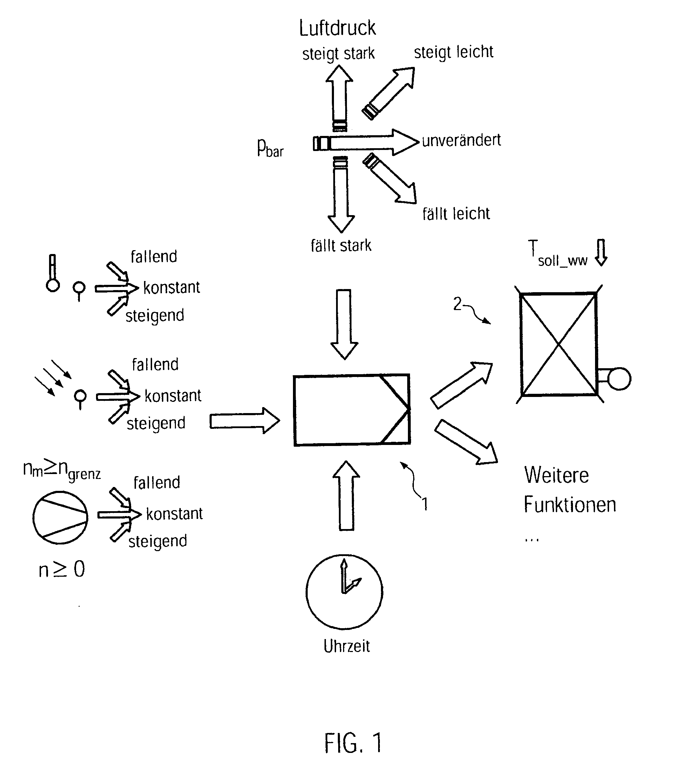

- Fig. 1: eine schematische Darstellung des erfindungsgemäßen Verfahrens mit verschiedenen Einflussfaktoren.

In Fig. 1 ist schematisch eine Regeleinheit dargestellt. Diese Regeleinheit ist als Regler 1 einer nicht näher dargestellten Solaranlage ausgebildet. Die Solaranlage weist die üblichen Bauteile auf, nämlich wenigstens einen Sonnenkollektor, eine zur Steuerung der Solaranlage dienenden Solarstation, eine Pumpe zum Transport eines in Rohren befindlichen Wärmespeichermediums und einen Ausdehnungsbehälter.

Das Wärmespeichermedium wird im Sonnenkollektor durch solare Energie erwärmt und mittels der Pumpe zum Warmwasserspeicher transportiert. Über einen Wärmetauscher wird die in dem Wärmespeichermedium gespeicherte Wärme an das zu erhitzende Wasser abgegeben. Das dann abgekühlte Wärmespeichermedium wird sodann zurückgeführt zum Sonnenkollektor, wo es erneut aufgewärmt wird. Die Solarstation dient der Steuerung der Solaranlage, wobei mittels verschiedener Sensoren unterschiedliche Parameter der Solaranlage ermittelt werden. Dazu gehören neben einer Vorlauftemperatur und Rücklauftemperatur auch Daten über die Pumpe, Temperatur am Kollektor und die Dauer der Intensität des Sonnenscheins.

Die Solaranlage ist Bestandteil einer Warmwasseraufbereitungsanlage, mit der zusätzlich zu der Solaranlage Warmwasser auch über eine konventionelle Heizung aufbereitet werden kann. Die konventionelle Heizung wird mittels fossiler Energieträger oder vorteihafterweise auch über Energieträger aus nachwachsenden Rohstoffen betrieben. Sofern nämlich die Solaranlage zum Nachladen des Warmwasserspeichers nicht zur Verfügung steht, wird mittels der konventionellen Heizung das Wasser in dem Warmwasserspeicher erhitzt.

Es ist vorgesehen, dass primär die Solaranlage zum Nachladen des Wassers im Warmwasserspeicher genutzt wird. Dazu ist vorgesehen, dass, wenn ausreichend solare Energie der Solaranlage zur Verfügung steht, diese zum Nachladen des Warmwasserspeichers zu nutzen. Hierzu weist die Warmwasseraufbereitungsanlage eine intelligente Regelung auf, durch die ein optimales Nachladen durch konventionelle Heizung und Solaranlage ermöglicht wird.

Insbesondere ist es durch die intelligente Regelung möglich, in Zeiten, in denen keine solare Energie zum Nachladen zur Verfügung steht, das Nachladen durch die konventionelle Heizung auszusetzen, wenn absehbar ist, dass kurzfristig soviel solare Energie zur Verfügung steht, dass damit das Nachladen möglich ist.

Um eine Aussage über zukünftige solare Erträge zu treffen, weist in einem ersten Ausführungsbeispiel die intelligente Regelung den Regler 1 auf, der mit Daten über den atmosphärischen Luftdruck versorgt wird. Der Luftdruck, der auch begrenzt auf ein regional kleines Gebiet gemessen werden kann, ist ein Indiz für Schön- und Schlechtwetterlagen. Hoher Luftdruck bzw. stark steigender Luftdruck deutet auf Schönwetter hin, wohingegen niedriger Luftdruck bzw. stark sinkender Luftdruck auf Schlechtwetter hindeutet. Mit dem Luftdruck lässt sich auf einfache Art und Weise ein Wettertrend abschätzen, der Aussage über die Ertragskraft der Solaranlage geben kann.

Zur Beurteilung des Wettertrends wird durch die Regelung eine Wahrscheinlichkeit über möglichen Sonnenschein ermittelt, mit der das Nachladen durch die konventionelle Heizung gesperrt oder zumindest für eine dynamisch zu regulierende Dauer ausgesetzt wird. Je höher die Wahrscheinlichkeit auf eine Schönwetterlage ist und ein Ertrag aus der Solaranlage erzielt werden kann, desto größer wird die Dauer des Aussetzens der Heizung gewählt. Demgegenüber wird bei einer niedrigeren Wahrscheinlichkeit, wenn also beispielsweise die Wahrscheinlichkeit auf zukünftigen solaren Ertrag gering ist, die konventionelle Heizung zum Nachladen bei Nichteintritt schneller zugeschaltet, als bei einer höheren Wahrscheinlichkeit.

In Fig. 1 werden verschiedene Möglichkeiten der Änderung des Luftdrucks dargestellt. Im Falle, dass die Änderung gleich Null ist, ist der anzeigende Pfeil waagerecht. Der Luftdruck kann in solch einem Fall konstant niedrig, durchschnittlich oder hoch sein. Bei niedrigem oder hohem Luftdruck würde die Regelung der Warmwasseraufbereitungsanlage unverändert bleiben. Bei durchschnittlichem Luftdruck wäre eine vorstehende Veränderung abzuwarten. Diese kann entweder fallend oder steigend sein, wobei zwischen einer starken und leichten Veränderung zu unterscheiden ist. Bei stark steigendem Luftdruck ist mit einer hohen Wahrscheinlichkeit auf eine Schönwetterlage zu rechnen, so dass das Nachladen durch die konventionelle Heizung gesperrt wird. Bei einem nur leichten Anstieg des Luftdrucks ist die Wahrscheinlichkeit auf ausreichend zukünftigen solaren Ertrag geringer, so dass die Dauer des Aussetzens der konventionellen Heizung verkürzt ist.

Im ungekehrten Fall, bei stark abfallendem Luftdruck ist mit einer Wolkendecke zu rechnen, durch die kein solarer Ertrag zukünftig zu erzielen ist. Ebenfalls bei nur leicht abfallendem Luftdrucks wird der solare Ertrag zurückgehen, so dass ein Nachladen durch die konventionelle Heizung bevorsteht. Durch diese Differenzierung der unterschiedlichen Entwicklungen des Luftdrucks ist eine dynamische Regelung des Nachladens möglich. Das Nachladen durch die konventionelle Heizung und die Solaranlage kann somit jederzeit der Situation angepasst werden. Beispielsweise wird bei einer bereits erfolgten Schiebung des Nachladens durch die konventionelle Heizung dieser Regelungsbefehl aufgehoben, wenn eine andere Situation vorliegt.

In die Bewertung über zukünftigen solaren Ertrag geht auf das Datum und die Uhrzeit ein, mit denen der Sonnenstand berechnet wird. Im Winter ist der solare Ertrag geringer als im Sommer, wenn die Tage länger sind und die Sonne bereits in den Morgen- und auch in den Abendstunden zur Energieversorgung beitragen kann.

In einem weiteren Ausführungsbeispiel der Erfindung gehen auch noch weitere ergänzende Daten in die Berechnung der Wahrscheinlichkeit ein. Hierzu ist in der Fig. 1 exemplarisch die Kollektortemperatur, die Sonnenstrahlung und die Pumpenfunktion dargestellt. Diese Daten gehen zur Berechnung der Wahrscheinlichkeit über zukünftigen solaren Ertrag mit ein. Die Daten aus diesen Informationen liegen als historische und/oder aktuelle Daten vor. Mit solchen Daten werden Wahrscheinlichkeiten berechnet über den zukünftigen solaren Ertrag. Insbesondere kann so der Ertrag über den Tag durch die Solaranlage berechnet und bewertet werden. Mit den Daten werden Veränderungen der Pumpenfunktion, Kollektortemperatur und Strahlung ermittelt. Hierbei wird zwischen fallend, konstant und steigend unterschieden womit zusätzlich eine Prognose eines Wettertrends möglich ist.

Aufgrund der unterschiedlichen Wetterverhältnisse ist die Warmwasseraufbereitungsanlage an regional typische Wetterverhalten anpassbar. Zusätzlich wie bereits schon erwähnt lässt sich mit den eingehenden Parametern in die intelligente Regelung eine Sommer-/Wintererkennung realisieren. Insgesamt ist ein vorausschauender Betrieb der Solaranlage und der gesamten Warmwasseraufbereitungsanlage mit der Erfassung des Luftdrucks möglich.

Mit der Unterdrückung des Nachladens durch die konventionelle Heizung oder einer Sollwertschiebung der Speicherwassertemperatur ist ein höherer Wirkungsgrad der Gesamtanlage zu erreichen, was sich durch höhere solare Erträge und Einsparung konventioneller Energie bemerkbar macht. Darüber hinaus ist die Erfassung des Luftdrucks preiswert. Barometer zur Messung des Luftdrucks sind einfach in die Hardware eines Reglers zu integrieren. Andererseits können sie auch extern an die Anlage angeschlossen werden.

## Patentansprüche

1. Verfahren zur Regelung oder Steuerung eines Nachladens eines Energiespeichers eines Heiz- und/oder Kühlsystems, **dadurch gekennzeichnet, dass** zur Regelung oder Steuerung des Nachladens des Energiespeichers ein zu messender atmosphärischer Luftdrucks herangezogen wird.

2. Verfahren nach Anspruch 1, **dadurch gekennzeichnet, dass** das System eine primäre Energiequelle, insbesondere eine Solaranlage oder andere regenerative Energiequelle, und eine nachgelagerte Energiequelle, insbesondere eine konventionelle Energiequelle, aufweist und die Energiequellen in Abhängigkeit des Luftdrucks den Energiespeicher nachladen.

3. Verfahren nach Anspruch 1, **dadurch gekennzeichnet, dass** ausschließlich der atmosphärische Luftdruck Grundlage der Regelung für die Erzeugung von Wärme und/oder Kälte durch das Heiz- und/oder Kühlsystems ist.

4. Verfahren nach Anspruch 1, **dadurch gekennzeichnet, dass** ergänzend weitere Daten zur Regelung der Erzeugung von Wärme durch die Solaranlage herangezogen werden, insbesondere Datum, Uhrzeit, Sonnenstrahlung, Kollektortemperatur, Pumpenfunktion, Energieinhalt des Energiespeichers, Außentemperatur, Raumtemperatur, Luftfeuchte, Verbrauchs-/Lastprofile oder dergleichen.

5. Verfahren nach zumindest einem der vorhergehenden Ansprüche, **dadurch gekennzeichnet, dass** der Luftdruck mittels eines Barometers und/oder Mikrobarometers gemessen wird.

6. Verfahren nach zumindest einem der vorhergehenden Ansprüche, **dadurch gekennzeichnet, dass** das Heiz- und/oder Kühlsystem den Luftdruck misst, insbesondere dass ein in einem Heizungs- bzw. Kühlungsregler implementiertes Barometer den Luftdruck misst.

7. Verfahren nach zumindest einem der vorhergehenden Ansprüche, **dadurch gekennzeichnet, dass** die Wahrscheinlichkeitsbewertung über den zukünftigen Sonnenschein zusätzlich zum Luftdruck mit weiteren Daten erfolgt.

8. Verfahren nach Anspruch 4 oder einem der vorhergehenden Ansprüche, **dadurch gekennzeichnet, dass** bei einer hohen Wahrscheinlichkeit auf Sonnenschein die nachrangige Energiequelle zum Nachladen zeitlich unterdrückt, insbesondere gesperrt, und bei durchschnittlicher und niedriger Wahrscheinlichkeit die Dauer des Nachladens durch die nachrangige Energiequelle verkürzt wird.

9. Verfahren nach einem der vorhergehenden Ansprüche, **dadurch gekennzeichnet, dass** die Regulierung der Sperrung der nachrangigen Energiequelle dynamisch erfolgt, insbesondere die Dauer der Sperrung abhängig von einem Trend oder von der Bewertung der Wahrscheinlichkeit über die Sonnenscheindauer ist.

10. Vorrichtung zum Nachladen eines Energiespeichers eines Heiz- und/oder Kühlsystems, wobei eine Regeleinheit das Nachladen regelt, **dadurch gekennzeichnet, dass** die Regeleinheit das Nachladen in Abhängigkeit von durch die Vorrichtung gemessenen atmosphärischen Luftdrucks regelt.

11. Vorrichtung nach Anspruch 10, **dadurch gekennzeichnet, dass** ausschließlich der atmosphärische Luftdruck Grundlage des Nachladens durch die Solaranlage ist.

12. Vorrichtung nach Anspruch 11 oder 12, **dadurch gekennzeichnet, dass** weitere ergänzende Daten zum Regeln des Nachladens durch die Solaranlage heranziehbar sind, insbesondere Datum, Uhrzeit, Sonnenstrahlung, Kollektortemperatur, Pumpenfunktion oder dergleichen.

13. Vorrichtung nach einem der Ansprüche 10 bis 12, **dadurch gekennzeichnet, dass** das System eine primäre Energiequelle , insbesondere eine Solaranlage oder andere regenerative Energiequelle, und eine nachgelagerte Energiequelle, insbesondere eine konventionelle Energiequelle, aufweist und der Energiespeicher in Abhängigkeit des Luftdrucks durch die Energiequellen nachladbar ist.

14. Vorrichtung nach einem der Ansprüche 10 bis 13, **dadurch gekennzeichnet, dass** der Luftdruck durch das System messbar ist, insbesondere durch ein in einem Heizungs- bzw. Kühlungsregler implementiertes Barometer messbar ist.

15. Vorrichtung nach einem der Ansprüche 10 bis 14, **dadurch gekennzeichnet, dass** mittels des atmosphärischen Luftdrucks eine Wahrscheinlichkeit über eine zukünftige Sonnenscheindauer ermittelbar ist, wobei in Abhängigkeit der Wahrscheinlichkeit das Nachladen durch die Heizung und/oder die Solaranlage regulierbar ist.
